# EUROPEAN PATENT APPLICATION

(11) **EP 4 496 052 A1**
(43) Date of publication of application: **22.01.2025**
(21) Application number: 23863487.7
(22) Date of filing: 06.09.2023
(51) Int. Cl.: H01M 10/04, H01M 10/44, H01M 4/04, H01M 50/105, H01M 50/342, H01M 50/30

(54) **FORMATION METHOD FOR POUCH-TYPE BATTERY CELLS**

(30) Priority: 06.09.2022 KR 20220113041
(71) Applicant: LG Energy Solution, Ltd., Seoul 07335 (KR)
(72) Inventor: BAE, Hyun Woo, Daejeon 34122 (KR); LEE, Jin Soo, Daejeon 34122 (KR); LEE, Ho Jung, Daejeon 34122 (KR); KIM, Young Woo, Daejeon 34122 (KR)
(74) Representative: Goddar, Heinz J.
(86) International application number: PCT/KR2023/013303
(87) International publication number: WO 2024/054021

(57) **Abstract**

Disclosed herein relates to a formation method of a battery cell using a formation device for a pouch-type battery cell, which includes a first charging step of charging a battery cell in a charging part; a hole processing step of forming a discharge hole in the gas pocket part of the charged battery cell; a gas discharging step of discharging internal gases generated during charging through a discharge hole; and a sealing step of sealing a discharge hole.

## Description

### [Technical Field]

The present invention relates to a formation method for a pouch-type battery cell.

More specifically, the present invention relates to a formation method for a pouch-type battery cell that prevents the electrolyte from being discharged together with the gas generated during the formation process of the battery cell, and prevents external contamination thereby.

This application claims the benefit of priority to Korean Patent Application No. 10-2022-0113041, filed on September 6, 2022, the disclosure of which is incorporated herein by reference in its entirety.

### [Background Technology of the Invention]

In general, secondary batteries can be categorized into cylindrical, prismatic, or pouch-type depending on their shape. Among them, pouch-type secondary batteries are attracting a lot of attention because they use a pouch exterior material consisting of a metal layer (foil) and a multilayer film of synthetic resin coated on the upper and lower surfaces of the metal layer to form the exterior, which can significantly reduce the weight of the battery compared to the cylindrical or prismatic type using metal cans, thus enabling the battery to be lightweight, and have the advantage of being able to change into various shapes.

An electrode assembly is stored in these pouch-type secondary batteries in a stacked shape, which has electrode tabs and electrode leads connected to it, with the electrode leads protruding from the pouch exterior material. These electrode leads are electrically connected through contact with an external device to receive power from the external device.

Pouch-type secondary batteries are manufactured by assembling the cells and activating the batteries, and in the battery activation step, the secondary battery cells are mounted on a charge and discharge device and charged and discharged to the conditions required for activation. In this way, the process of performing a predetermined charge and discharge using a charge and discharge device to activate the battery is called the formation process.

During the formation process, both surfaces of the battery cell can be pressurized using a pressurization means such as a zig, which includes a flat, pressure plate during activation charging, and is sometimes referred to as a zig formation.

The jig formation as described above can prevent the expansion of a negative electrode during the activation process, promote the chemical reaction of the battery to induce gas generation, and the generated internal gas is transported to the gas pocket part.

In this case, the electrode assembly is stored in the pouch, an electrolyte is injected and sealed, and during the formation process, gas is generated due to the chemical reaction of the electrolyte and electrodes, which causes the gas pocket part of the pouch-type secondary battery to expand.

If the gas pocket part is overinflated, interference and collision with the transfer means may occur when the battery cells are removed from the jig formation equipment, interference between the battery cells during the transferring process may result in poor battery cell appearance, and excessive pouches are required to create sufficient internal space for the gas pocket part.

In order to solve the above-mentioned problems, a discharge hole is formed in the gas pocket part of the battery cell during the formation process of the battery cell to discharge the gas generated during charging to the outside.

However, there was a problem of forming a discharge hole in the gas pocket part of the battery cell in that when the gas is discharged, the electrolyte is discharged along with the gas due to the increase in the internal pressure of the battery cell, contaminating the outside and causing safety accidents.

### [Prior Art Documents]

Korean Patent Publication No. 10-2013-0024807

### [Description of the Invention]

### [Technical Problem]

The present invention was made to solve the above-mentioned problems, and aims to provide a formation method for a pouch-type battery cell in which a pouch-type battery cell is partially charged in a formation process to generate gas, partially expanded so that the vacuum-tight parts of the gas pocket part are spaced apart from each other, and then a discharge hole is formed in the partially expanded gas pocket part so that only internal gas can be discharged to the outside without discharging electrolyte, and a stable charge and discharge is possible by naturally discharging the internal gas generated during the process while performing a residual charging to the battery cell from which the gas is discharged.

And, by discharging only the internal gas generated by the battery cell during the formation process, the present invention aims to provide a formation method for a pouch-type battery cell that prevents the discharge of electrolyte along with gas discharge, thereby preventing surrounding contamination.

### [Technical Solution]

In order to realize the above-mentioned problems, the present invention provides a formation method of a battery cell including: a first charging step of charging a battery cell in a charging part; a hole processing step of forming a discharge hole in the gas pocket part of the charged battery cell; a gas discharging step of discharging internal gases generated during charging through a discharge hole; and a sealing step of sealing a discharge hole.

As an exemplary embodiment, a second charging step of charging a battery cell after a gas discharging step, in which the internal gas is discharged through a discharge hole formed in the gas pocket part, may be further included

As another exemplary embodiment, the first charging step may perform partial charging on the battery cell to generate gas inside the battery cell to partially expand a gas pocket part.

As a specific exemplary embodiment, the partial charging may charge the battery cell prior to being fully charged.

As another specific exemplary embodiment, the partial charging may charge the battery cell at 50% or less of its total charge capacity.

As an exemplary embodiment, the partial charging may charge to the point where a vacuum-tight part of the gas pocket part of the battery cell is spaced apart.

As another exemplary embodiment, after performing a first charging step on the battery cell, a discharge hole may be formed in a partially expanded gas pocket part to discharge internal gas.

As an exemplary embodiment, the second charging step may perform a residual charging after gas discharge through a discharge hole of the gas pocket part.

As a specific exemplary embodiment, the residual charging may charge while discharging gas through a discharge hole of the gas pocket part.

As another specific exemplary embodiment, the residual charging may charge the battery cell prior to being fully charged.

As another specific exemplary embodiment, the residual charging may charge the battery cell to 70% of its total charge capacity.

### [Advantageous Effects]

According to the present invention, by performing a partial charging on a pouch-type battery cell to partially expand the gas pocket part so that the vacuum-tight parts of the gas pocket part are spaced apart from each other to ensure that the gas pocket part is not overexpanded, it is possible to prevent the discharge of electrolyte when a discharge hole is formed in the gas pocket part and to stably discharge only internal gas.

In addition, by performing partial and residual charging of the battery cell before and after the formation of the discharge hole in the gas pocket part of the battery cell during the formation process, only the internal gas can be discharged through the discharge hole, and the internal gas can be discharged stably without discharging the electrolyte to prevent surrounding contamination.

### [Brief Description of the Drawings]

FIG. 1 is a flowchart illustrating a formation method of a pouch-type battery cell according to an exemplary embodiment of the present invention.
FIG. 2 is a diagram schematically illustrating an exemplary embodiment of a pouch-type battery cell formation device to illustrate a formation method of a pouch-type battery cell according to the present invention.
FIG. 3 is a diagram schematically illustrating another exemplary embodiment of a pouch-type battery cell formation device to illustrate a formation method of a pouch-type battery cell according to the present invention.
FIG. 4 is a diagram schematically illustrating another exemplary embodiment of a pouch-type battery cell formation device to illustrate a formation method of a pouch-type battery cell according to the present invention.

### [Best Mode for Carrying out the Invention]

The following is a detailed description of the present invention. It should be noted that the terms or words used in this specification and the claims of the patent are not to be construed in their ordinary or dictionary sense, but rather in a sense and concept consistent with the technical idea of the invention, based on the principle that the inventor may properly define the concept of a term to best describe his invention.

The terms "comprise," "include" and "have" are used herein to designate the presence of characteristics, numbers, steps, actions, components or members described in the specification or a combination thereof, and it should be understood that the possibility of the presence or addition of one or more other characteristics, numbers, steps, actions, components, members or a combination thereof is not excluded in advance.

In addition, when a part of a layer, a film, a region or a plate is disposed "on" another part, this includes not only a case in which one part is disposed "directly on" another part, but a case in which a third part is interposed there between. In contrast, when a part of a layer, a film, a region or a plate is disposed "under" another part, this includes not only a case in which one part is disposed "directly under" another part, but a case in which a third part is interposed there between. In addition, in this application, "on" may include not only a case of disposed on an upper part but also a case of disposed on a lower part.

In addition, when a part of a layer, a film, a region or a plate is disposed "on" another part, this includes not only a case in which one part is disposed "directly on" another part, but a case in which a third part is interposed there between. In contrast, when a part of a layer, a film, a region or a plate is disposed "under" another part, this includes not only a case in which one part is disposed "directly under" another part, but a case in which a third part is interposed there between. In addition, in this application, "on" may include not only a case of disposed on an upper part but also a case of disposed on a lower part.

### (First embodiment)

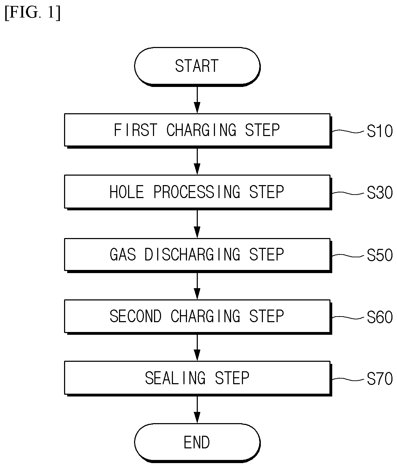

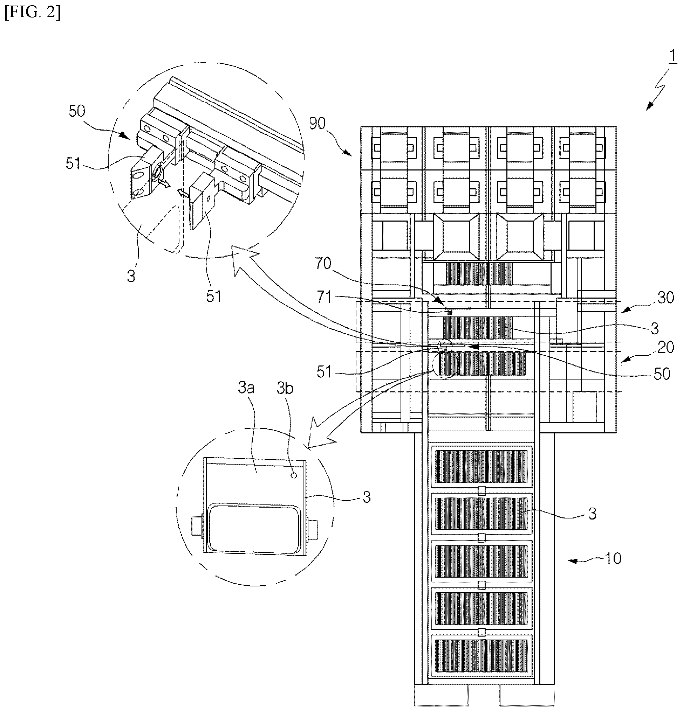

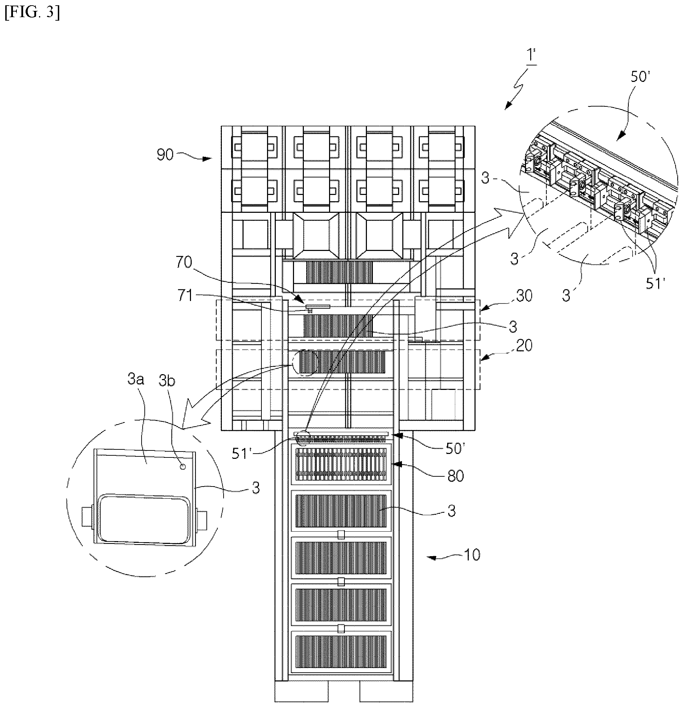

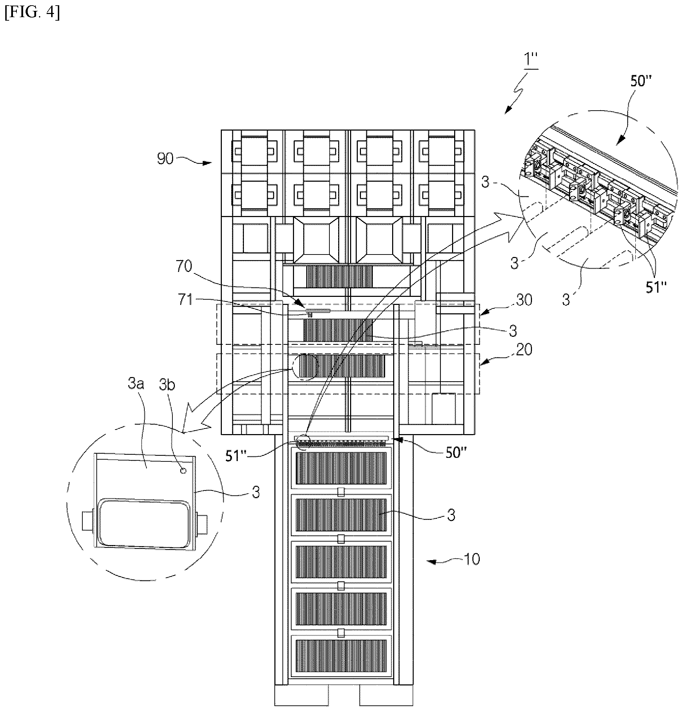

* FIG. 1 is a flowchart illustrating a formation method of a pouch-type battery cell according to an exemplary embodiment of the present invention. FIG. 2 is a diagram schematically illustrating an exemplary embodiment of a pouch-type battery cell formation device to illustrate a formation method of a pouch-type battery cell according to the present invention. FIG. 3 is a diagram schematically illustrating another exemplary embodiment of a pouch-type battery cell formation device to illustrate a formation method of a pouch-type battery cell according to the present invention. FIG. 4 is a diagram schematically illustrating another exemplary embodiment of a pouch-type battery cell formation device to illustrate a formation method of a pouch-type battery cell according to the present invention.

As shown in FIG. 1, a formation method for a battery cell according to an exemplary embodiment of the present invention includes a first charging step S 10 for charging a battery cell at a charging part, a hole processing step S30 for forming a discharge hole in a gas pocket part of the charged battery cell, a gas discharging step S50 for discharging internal gas generated during charging through a discharge hole, and a sealing step S70 for sealing a discharge hole.

Specifically, the present invention is a formation method for performing a predetermined charge and discharge to a battery cell for activation of the battery cell, which performs a first charging step S 10 as a condition necessary for expanding a plurality of battery cells arranged in the charging part.

Here, charging can be performed sequentially for the battery cells arranged in the charging part or simultaneously for all the battery cells arranged in the charging part.

The first charging step performs a partial charging on the battery cell to generate gas inside the battery cell to partially expand the gas pocket part.

In other words, the first charging step performs a partial charging on the battery cell to generate gas due to the chemical reaction of the electrolyte and electrodes inside the battery cell, which partially expands the gas pocket part of the battery cell.

Here, the partial charging may be configured to charge the battery cell prior to being full charged.

In this way, by charging the battery cell before it is fully charged, the gas pocket part in the formation process of conventional battery cells can be prevented from over-expanding due to the gas generated when the battery cell is fully charged.

In this case, the partial charging may be configured to charge the battery cell to less than or equal to 50% of the total charge capacity of the battery cell.

In this way, by charging the battery cell to 50% or less of its total charge capacity, the gas generated inside the battery cell can be regulated to a predetermined amount, and the pressure inside the battery cell can be controlled by partially expanding the gas pocket part to prevent the gas pocket part from being over-expanded.

Preferably, the partial charging can be no more than 5% to 50% of the total charge capacity of the battery cell.

A hole processing step S30 is performed to form a discharge hole in a gas pocket part of a battery cell that has been charged through the first charging step S30.

Then, the gas inside the battery cell is discharged through the discharge hole formed in the gas pocket part of the cell through the hole processing step S50.

Here, after performing the first charging step on the battery cell, a discharge hole is formed in the partially expanded gas pocket part, and the internal gas is discharged through the discharge hole in the partially expanded gas pocket part.

As described above, by partially charging the battery cell and partially expanding so that the gas pocket part is not over-expanded, and then forming a discharge hole in the gas pocket part, it is possible to prevent the discharge of the electrolyte outside the battery cell due to the capillary phenomenon caused by the increase in the internal pressure of the battery cell when the gas is discharged through the discharge hole, and only the internal gas can be discharged without the discharge of the electrolyte.

Here, the method may further include a second charging step S60 in which the battery cell is charged after the gas discharging step in which the internal gas is discharged through the discharge hole formed in the gas pocket part.

At this time, the second charging step can perform residual charging after discharging the gas through the discharge hole of the gas pocket part.

The residual charging may be configured to perform charging while discharging the gas through a discharge hole in the gas pocket part.

As described above, by performing a partial charging on the battery cell to partially expand the gas pocket part, and then forming a discharge hole in the partially expanded gas pocket part to primarily discharge the gas generated inside the battery cell, and then performing a residual charging on the battery cell after the internal gas generated by the partial charging is discharged, it is possible to stably perform the residual charging while secondarily discharging the gas generated during the residual charging, thereby fundamentally preventing the external discharge of the electrolyte injected into the battery cell under vacuum.

Here, the residual charging may charge the battery cell prior to being fully charged, preferably up to 70% of the total charge capacity of the battery cell.
Hereinafter, a formation method of a pouch-type battery cell according to an exemplary embodiment of the present invention will be described in more detail, together with a pouch-type battery cell formation device.

First, as shown in FIG. 2, the following describes a formation method of a pouch-type battery cell by means of a formation device 1 including a charging part 10 for charging the battery cells 3, and a loading buffer part 20 in which the battery cell 3 waits prior to being inserted into the charging part 10, wherein the battery cells 3 are retrieved by the loader/unloader 90, an unloading buffer part 30 in which the battery cells 3 that have been charged and retrieved from the charging part 10 wait, and a hole processing part 50 provided on one side of the loading buffer part 20 to form a discharge hole 3b in the gas pocket part 3a of the battery cell 3 accommodated in the loading buffer part 20, and a sealing part 70 provided on one side of the unloading buffer part 30 to seal a discharge hole 3b formed in the gas pocket part 3a of the battery cell 3 accommodated in the unloading buffer part 30.

A pouch-type battery cell 3 is manufactured by storing a laminate comprising a positive electrode, a separator, and a negative electrode in a pouch, sealing it, and injecting an electrolyte into the pouch under vacuum.

The manufactured battery cell 3 is supplied to the loading buffer part 20, and the battery cell 3 supplied to the loading buffer part 20 is transferred to the charging part 10 to perform charging and discharging.

The battery cell 3 supplied to the charging part 10 performs a predetermined charge and discharge with a charge and discharge device (not shown) provided in the charging part 10 to activate the battery.

Specifically, a partial charging is performed on the battery cell 3 supplied to the charging part 10 to generate gas inside the battery cell 3 to partially expand the gas pocket part 3a.

As such, a partial charging is performed on the battery cell 3 through the charging part 10 to partially expand the gas pocket part 3a, and the battery cell 3 with a partially expanded gas pocket part 3a is transferred to the loading buffer part 20.

The battery cell 3 transferred to and arranged in the loading buffer part 20 forms a discharge hole 3b in the partially expanded gas pocket part 3a through the hole processing part 50 provided on one side of the loading buffer part 20. In other words, the hole processing part 50 moves toward the battery cell 3 transferred and arranged in the loading buffer part 20, and the hole processing unit 51 of the hole processing part 50 transferred to the battery cell 3 forms the discharge hole 3b having a predetermined size while pressing the gas pocket part 3a.

As described above, a discharge hole 3b is formed in the gas pocket part 3a of the partially expanded battery cell 3 to discharge the gas inside the battery cell 3, and the discharged gas is discharged to the outside through the gas discharge part (not shown) provided on the formation device 1.

In the loading buffer part 20, the battery cell 3 in which gas has been discharged through the discharge hole 3b formed in the gas pocket part 3a through the hole processing part 50 is transferred back to the charging part 10, and the battery cell 3 transferred to the charging part 10 performs residual charging.

At this time, the gas generated inside the battery cell 3 during residual charging is discharged through the discharge hole 3b formed in the gas pocket part 3a to perform residual charging.

The battery cell 3 that has completed the residual charging through the charging part 10 is transferred to the unloading buffer part 30, and the battery cell 3 transferred to the unloading buffer part 30 is sealed by sealing the discharge hole 3b through the sealing unit 71 of the sealing part 70 provided on one side of the unloading buffer part 30, and the sealed battery cell 3 is discharged.

Meanwhile, as shown in FIG. 3, a formation method of a pouch-type battery cell using a formation device 1', which further includes a separate hole processing buffer part 80 on the charging part 10 and is provided with a hole processing part 50' on one side of the hole processing buffer part 80, is described.

In this case, the partially charged battery cell 3 through the charging part 10 is transferred to the hole processing buffer part 80, and then the discharge hole 3b is formed for the battery cell 3 transferred to the hole processing buffer part 80.

Specifically, the manufactured pouch-type battery cell 3 is supplied to the loading buffer part 20, and the battery cell 3 supplied to the loading buffer part 20 is transferred to the charging part 10 to perform charging and discharging.

A partial charging is performed on the battery cell 3 supplied to the charging part 10 to generate gas inside the battery cell 3 to partially expand the gas pocket part 3a.

In this way, a partial charging is performed on the battery cell 3 through the charging part 10 to partially expand the gas pocket part 3a, and then the battery cell 3 partially expanded by the gas pocket part 3a is transferred to the hole processing buffer part 80 disposed on the charging part 10.

The battery cell 3 transferred to and arranged in the hole processing buffer part 80 forms a discharge hole 3b in the partially expanded gas pocket part 3a through the hole processing part 50' provided on one side of the hole processing buffer part 80.

At this time, the hole processing part 50' moves toward the battery cell 3 that is transferred to the hole processing buffer part 80 and arranged, and the gas pocket part 3a is pressed through the hole processing unit 51' of the hole processing part 50' transferred to the battery cell 3 to form a discharge hole 3b having a predetermined size.

As such, a discharge hole 3b is formed in the gas pocket part 3a of the partially expanded battery cell 3 to discharge the gas inside the battery cell 3, and the discharged gas is discharged to the outside through the gas discharge part (not shown) provided on the formation device 1'.

In the hole processing buffer part 80, the battery cell 3 from which gas is discharged through the discharge hole 3b formed through the hole processing part 50' is transferred back to the charging part 10, and the battery cell 3 transferred to the charging part 10 performs residual charging.

The battery cell 3 that has completed the residual charging through the charging part 10 is transferred to the unloading buffer part 30, and the battery cell 3 transferred to the unloading buffer part 30 is sealed by sealing the discharge hole 3b through the sealing part 70 provided on one side of the unloading buffer part 30, and the sealed battery cell 3 is discharged.

With the formation device of the pouch-type battery cell of the above-described configuration, when performing the formation process, a hole processing buffer part 80 is provided on the charging part 10, and a hole processing part 50' for forming the discharge hole 3b is provided on one side of the hole processing buffer part 80, so that the transfer distance of the battery cell 3 can be shortened and the overall process time can be reduced compared to the formation device in which the hole processing part 50' is provided on one side of the loading buffer part 20.

Here, the hole processing part 50' provided on one side of the hole processing buffer part 80 may be formed with a plurality of hole processing units 51' that form a discharge hole 3b in the gas pocket part 3a of the battery cell 3 corresponding to the battery cells 3 arranged in the charging part 10. In this case, all the hole processing units 51' of the hole processing part 50' may be configured to move toward the battery cells 3 and then to form the discharge holes 3b simultaneously for all the battery cells 3 arranged in the charging part 10.

In this way, the hole processing part 50' provided on one side of the hole processing buffer part 80 is configured to move forwardly toward the battery cells 3 accommodated in the hole processing buffer part 80 to form a discharge hole 3b in the gas pocket part 3a of all the battery cells 3 arranged in the hole processing buffer part 80, and then move backwardly to return to its original position.

Meanwhile, when the hole processing unit 51' in the hole processing part 50' is formed as one, the discharge hole 3b can be formed sequentially for the battery cells 3 arranged in the hole processing buffer part 80 while the hole processing unit 51' moves forward and backward toward the battery cells 3 and slidingly moves in the thickness direction of the battery cells 3.

Meanwhile, as shown in FIG. 4, a formation method of a pouch-type battery cell by means of a formation device 1" is described, in which a hole processing part 50" forming a discharge hole 3b in a gas pocket part 3a of the battery cell 3 is provided on one side of the charging part 10.

In this case, both the process of charging the battery cell 3 and the process of forming a discharge hole 3b in the gas pocket part 3a of the battery cell 3 can be performed in the charging part 10, thereby improving the convenience of the process and reducing the process time.

Specifically, the manufactured battery cell 3 is supplied to the loading buffer part 20, and the battery cell 3 supplied to the loading buffer part 20 is transferred to the charging part 10 for performing charge and discharge.

The battery cell 3 transferred to the charging part 10 performs a partial charging, generating gas inside the battery cell 3 to partially expand the gas pocket part 3a.

As such, after performing a partial charging on the battery cell 3 through the charging part 10 to partially expand the gas pocket part 3a, the hole processing part 50" provided on one side of the charging part 10 is moved so that the gas pocket part 3a faces the partially expanded battery cell 3, and a discharge hole 3b is formed in the partially expanded gas pocket part 3a through the hole processing part 50".

That is, the hole processing part 50" moves toward the partially charged battery cell 3 on the charging part 10, and the gas pocket part 3a is pressed through the hole processing unit 51" of the hole processing part 50" moved toward the battery cell 3 to form the discharge hole 3b.

Here, the charging part 10 can temporarily stop charging the battery cell 3 when forming the discharge hole 3b in the gas pocket part 3a of the battery cell 3 through the hole processing part 50".

In this way, a residual charging is performed again in the charging part 10 for the battery cell 3 from which gas is discharged through the discharge hole 3b formed in the gas pocket part 3a, and the internal gas generated during the residual charging is discharged through the discharge hole 3b formed in the gas pocket part 3a while performing the residual charging.

Through the charging part 10, the battery cell 3 is transferred to the unloading buffer part 30, and the battery cell 3 transferred to the unloading buffer part 30 is sealed by sealing the discharge hole 3b through the sealing part 70 provided on one side of the unloading buffer part 30, and the sealed battery cell 3 is discharged.

When performing a formation process through the formation device 1 of the pouch-type battery cell of the above-described configuration, a hole processing part 50" for forming a discharge hole 3b is provided on the charging part 10, so that the transfer process of the battery cell 3 can be reduced, thereby dramatically shortening the process time.

In this way, by performing a partial charging to partially expand the gas pocket part 3a, forming a discharge hole 3b in the partially expanded gas pocket part 3a to discharge only gas, and then performing a residual charging again, it is possible to prevent gas and electrolyte inside the battery cell 3 from being discharged together through the discharge hole 3b due to overexpansion of the gas pocket part 3a when charging a conventional battery cell 3, and to prevent contamination of the formation device by the electrolyte.

In other words, conventionally, when the electrolyte is injected into the pouch-type battery cell 3 in the assembly stage, the electrolyte is discharged together with the internal gas of the pouch-type battery cell 3 when the gas pocket part 3a is formed due to the vacuum-tight part of the gas pocket part 3a and the internal pressure, but by partially expanding the gas pocket part 3a by partially charging the battery cell 3 with the formation method according to the present invention, the internal pressure of the battery cell 3 can be formed to a certain size so that only the gas except the electrolyte can be stably discharged.

### (Second embodiment)

In other exemplary embodiments of the invention, the partial charging via the charging part may be configured to charge to a point where the vacuum-tight part of the gas pocket part of the battery cell is spaced apart.

In other words, in order to prevent gas and electrolyte from being discharged together along a vacuum-tight part of a gas pocket part of a battery cell when forming a discharge hole in a battery cell, a partial charging can be performed to a point where the vacuum-tight parts of the gas pocket part of the battery cell are spaced apart at a certain distance, and then a discharge hole can be formed in the gas pocket part of the partially charged battery cell.

As mentioned above, by spacing apart the vacuum-tight parts of the gas pocket part, it is possible to prevent the internal gas and electrolyte from being discharged together due to internal pressure when forming a discharge hole in the gas pocket part.

In this embodiment, the partial charging is configured to charge to a point where the vacuum-tight part the gas pocket part of the battery cell is spaced apart, but the partial charging may also be configured to charge to a point where the gas pocket part is expanded to a predetermined size.

That is, when the battery cell is fully charged, charging can only be performed to the point where the gas pocket part expands to a predetermined size relative to the reference expansion size of the gas pocket part.

As such, conventionally, after injecting the pouch-type battery cell with electrolyte in a vacuum during the assembly stage, the internal gas and electrolyte of the pouch-type battery cell may be discharged together due to the internal pressure when the vacuum-tight part of the gas pocket part form a discharge hole, but in this embodiment, only the gas excluding the electrolyte can be stably discharged by partially charging the battery cell and spacing the vacuum-tight part of the gas pocket part from each other, or by expanding the gas pocket part to a predetermined size.

Here, the setting size of the gas pocket part can be set to be about 1/3 to 2/3 of the size of the expanded size of the gas pocket due to gas generated inside the battery cell when the existing battery cell is fully charged, but is not limited thereto.

At this time, a separate detection sensor for detecting the size of the gas pocket part or a vision device for taking images to compare and analyze the size of the gas pocket part may be further included.

Meanwhile, when partially charging the battery cell, it is possible to set a charging time and then perform partial charging for the set time to partially expand the gas pocket part, to space apart the vacuum-tight part of the gas pocket part, or to expand the gas pocket part to a predetermined size so that only gas can be stably discharged without discharging electrolyte when forming a discharge hole in the gas pocket part, but it is not limited thereto, and it is possible to make various other changes.

While the present invention has been shown and described with reference to certain embodiments, it will be readily apparent to one of ordinary skill in the art that various modifications and changes can be made without departing from the ideas and scope of the invention as set forth in the appended claims.

### [Reference numerals]

1, 1', 1": FORMATION DEVICE FOR POUCH-TYPE BATTERY CELLS
3: BATTERY CELL
3a: GAS POCKET PART
3b: DISCHARGE HOLE
10: CHARGING PART
20: LOADING BUFFER PART
30: UNLOADING BUFFER PART
50, 50', 50": HOLE PROCESSING PART
51, 51', 51": HOLE PROCESSING UNIT
70: SEALING PART
80: HOLE PROCESSING BUFFER PART
90: LOADER/UNLOADER

## Claims

1. In a formation method of a battery cell,
a formation method of a pouch-type battery cell comprising:
a first charging step of charging a battery cell in a charging part;
a hole processing step of forming a discharge hole in the gas pocket part of the charged battery cell;
a gas discharging step of discharging internal gases generated during charging through a discharge hole; and
a sealing step of sealing a discharge hole.

2. The formation method of a pouch-type battery cell of claim 1, further comprising:
a second charging step of charging a battery cell after a gas discharging step, in which the internal gas is discharged through a discharge hole formed in the gas pocket part.

3. The formation method of a pouch-type battery cell of claim 2, wherein
the first charging step performs partial charging on the battery cell to generate gas inside the battery cell to partially expand a gas pocket part.

4. The formation method of a pouch-type battery cell of claim 3, wherein
the partial charging charges the battery cell prior to being fully charged.

5. The formation method of a pouch-type battery cell of claim 4, wherein
the partial charging charges the battery cell at 50% or less of its total charge capacity.

6. The formation method of a pouch-type battery cell of claim 3, wherein
the partial charging charges to the point where a vacuum-tight part of the gas pocket part of the battery cell is spaced apart.

7. The formation method of a pouch-type battery cell of claim 2, wherein
after performing a first charging step on the battery cell, a discharge hole is formed in a partially expanded gas pocket part to discharge internal gas.

8. The formation method of a pouch-type battery cell of claim 7, wherein
the second charging step performs a residual charging after gas discharge through a discharge hole of the gas pocket part.

9. The formation method of a pouch-type battery cell of claim 8, wherein
the residual charging charges while discharging gas through a discharge hole of the gas pocket part.

10. The formation method of a pouch-type battery cell of claim 8, wherein
the residual charging charges the battery cell prior to being fully charged.

11. The formation method of a pouch-type battery cell of claim 10, wherein
the residual charging charges the battery cell to 70% of its total charge capacity.
